# EUROPEAN PATENT SPECIFICATION

(11) **EP 1 042 961 B1**
(45) Date of publication and mention of the grant of the patent: **03.04.2002**
(21) Application number: 00202409.9
(22) Date of filing: 07.07.2000
(51) Int. Cl.: A23G 1/08, B30B 7/02

(54) **Cocoa-press**
Kakaopresse
Presse à cacao

(30) Priority: 24.03.2000 NL 1014739
(43) Date of publication of application: 11.10.2000
(73) Proprietor: B.V. MACHINEFABRIEK P.M. DUYVIS, 1540 AA Koog aan de Zaan (NL)
(72) Inventor: Mantel, Rob Victor, 1531 AV Wormer (NL)
(74) Representative: Aalbers, Arnt Reinier

(56) References cited:
- EP-A- 0 450 636
- EP-A- 0 634 268
- WO-A-92/12853
- DE-A- 4 040 430
- DE-B- 1 109 501
- DE-C- 14 990
- DE-C- 723 722
- US-A- 4 633 775
- US-A- 4 684 466
- US-A- 4 819 555

## Description

The present invention relates to a press for separating cocoa mass into cocoa cake and cocoa butter in accordance with the preamble of claim 1.

A press of this kind is known from practice. It is used for separating cocoa mass into cocoa butter (which is liquid at an elevated temperature) on the one hand and solid cakes, which can be processed into cocoa powder, on the other hand. Generally, a hydraulic cylinder is provided, which is formed in a cylinder block which is connected with a retainer by means of two separate tie rods. Present in the cylinder is a plunger, and between said plunger and the retainer there is disposed a series of pressure elements. The pressure elements comprise a so-called pot, which defines a (usually cylindrical) cavity in which a squeezer and for example two filters are present. The space between the filters is intended for receiving an amount of cocoa mass to be pressed.

During a pressure cycle the pots are filled with heated cocoa mass via supply lines, and subsequently they are compressed. The cocoa butter is thereby pressed out through the filters and discharged.

In many cases the cocoa industry requires that the obtained cakes contain less than 10 % by weight of cocoa butter. In order to meet this requirement with a hydraulic press according to the prior art, prolonged pressing at a very high pressure is necessary.

It is noted that DE-A-1 109 501 is directed to a cacao press, wherein the filling height of the cavity (*Preßtopf*) is preferably about 20 mm and should not exceed 30 mm, i.e. should be 30 mm or less.

WO 92/12853 seeks to increase the productivity of a squeezer for squeezing oil-containing materials, particularly a mass of cacao, without increasing the number or diameter of the squeezing chambers. To this end, the filtering elements placed on the chamber walls have a nonplanar shape having an increased area, e.g. hemispherical, tapered or "serpentine".

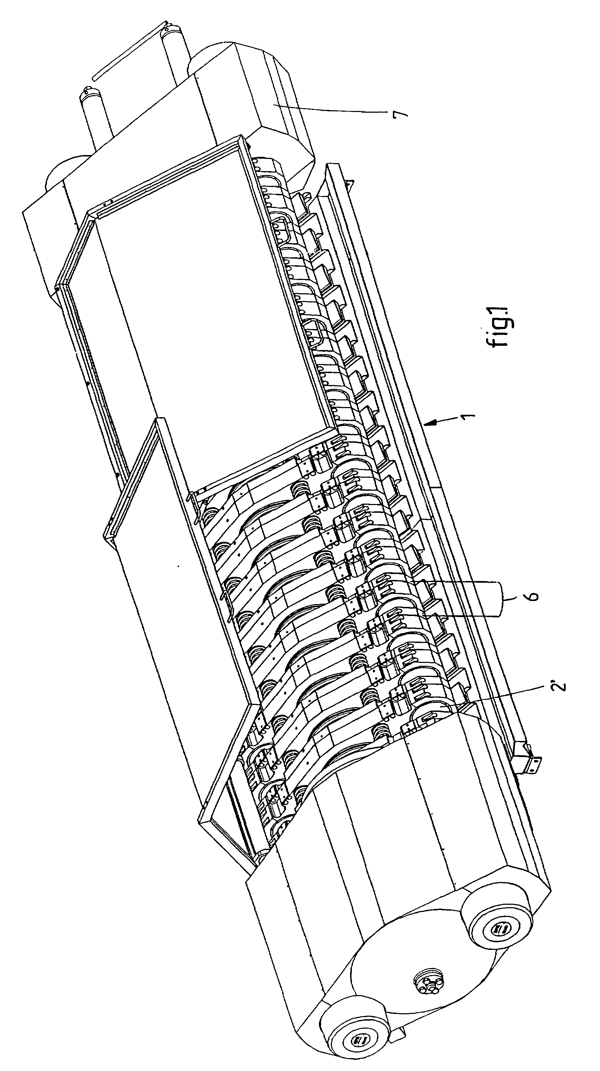

EP-A-0 634 268 is directed to a male pot for cacao and oil seed presses. The pot comprises two ring/disc elements (numeral 4 in figures 1-5) provided with a plurality of holes (5) connected with corresponding channels (6) in turn connected with a draining channel (7) "for draining therefrom liquid material which can comprise cacao butter or an oil material".

DE-C-723 722 concerns a cacao press wherein the cacao mass is still liquid after pressing.

DE-C-14 990 concerns a cacao press comprising a plurality of pressure elements *(Kasten)* each provided with a single filter means.

EP-A-0 318 872 concerns a device for the separation of gaseous and/or liquid matter from bulk goods with the effect of pressure on a charge of the goods enclosed in at least one press chamber, and compaction to the solid mass of a press-cake.

The object of the present invention is to provide a press which makes it possible to reduce the length of a pressure cycle significantly and/or to reduce the pressure, all this preferably without drastic modification of the press in comparison with the prior art presses.

In order to accomplish that objective, the press according to the invention is characterised as defined in claim 1.

Surprisingly it has become apparent that the production capacity of the present press can be increased significantly in this manner, as will be discussed in more detail hereafter.

The invention furthermore relates to a method for operating a press in accordance with claim 5. The use of this method makes it possible to (partially) utilize the advantages of the present invention in existing presses. Furthermore it is possible to modify the pressure elements of existing presses in accordance with claim 6.

With the press and the method according to the invention, a flat or substantially flat filter is preferably disposed in front of the squeezer and on the side of the cavity disposed opposite said squeezer. In an embodiment of this kind the spacing between the filters is consequently maximally (2 x 45 mm) 90 mm, and preferably maximally (2 x 38 mm) 76 mm, in the filling position of the squeezer. Preferably, said spacing is not less than 60 mm in said filling position.

The invention will now be explained in more detail with reference to the drawings, which show an exemplary embodiment of a hydraulic press according to the invention.

Figure 1 is a perspective view of a hydraulic press according to the invention for pressing cocoa mass.

Figure 2 is a cross-sectional view of the press of Figure 1 in the filling position.

Figure 3 is a sectional view corresponding to Figure 2, showing the end of the pressure phase.

The drawings show a hydraulic press according to the invention which is adapted for pressing cocoa mass, wherein cocoa cakes to be processed into cocoa powder and cocoa butter pressed from said cocoa mass are formed. This pressing process and the pressure elements and pressure means associated therewith are known per se and will be discussed only briefly.

The hydraulic press 1 as shown is mounted in a frame (not shown) and includes two tie rods 2, 2', which are secured in a cylinder jacket 3 of a hydraulic pressure cylinder 4, on the left-hand side of press 1 in the drawing. Present in pressure cylinder 4 is a plunger 5, which is capable of reciprocating movement therein. Plunger 5 is capable of exerting a pressure on a series of sixteen (in this embodiment) pressure elements 6, which are supported by a retainer 7 at the end remote from plunger 5. Retainer 7 and cylinder jacket 3 are connected by tie rods 2, 2'.

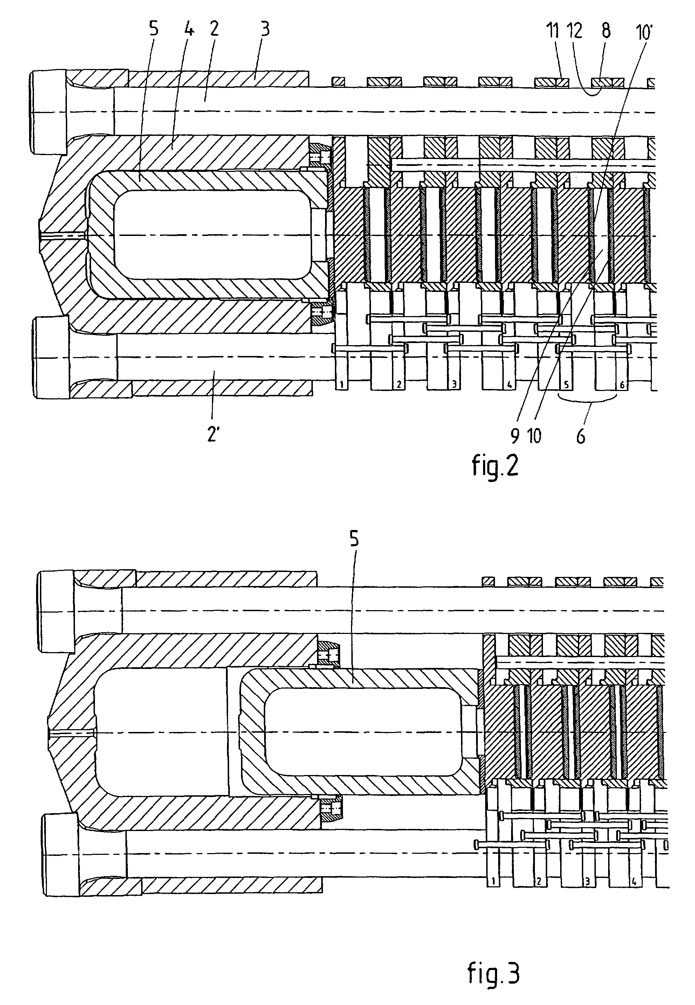

As in shown in Figures 2 and 3, pressure elements 6 each comprise a pot 8 including a cylindrical cavity 9 which is bounded at head faces by a disc-shaped filter 10, 10' that is known per se. The left-hand filter 10 abuts against a cylindrical squeezer 11, which fits the cylindrical cavity 9 precisely. The right-hand filter 10' abuts against the back of a squeezer which forms part of the pressure element that is disposed to the right of pot 8. The pots as well as the squeezers are mounted round tie rods 2, 2' by means of circular holes 12, which are formed in the side portions of the pots and the squeezers. The pots furthermore include supply lines for the cocoa mass, whilst the squeezers include discharge lines for discharging cocoa butter that has been pressed through the filters.

Figure 2 shows the press 1 in the filling position. In this position the hydraulic plunger 5 occupies its extreme left-hand position, and the spacing between the disc-shaped filters 10, 10', and thus the volume of cavity 9 in each of the pressure elements 6, is maximal. According to the invention, all points or nearly all points of cavity 9 must be spaced from an imaginary plane through the filter or through one of the filters by a distance of less than 45 mm. For cavity 9, which is provided with two flat parallel filters 10, 10' at both ends, this means that the spacing between said filters 10, 10' must not exceed 90 mm. In this exemplary embodiment the spacing between the filters 10, 10' that are present in each of the pressure elements 6 is 71 mm in the filling position.

Figure 3 shows how the pressure elements 6 are compressed evenly by moving plunger 5 to the right until the pressure reaches a specific threshold value and the spacing between the filters has been reduced to for example 36 mm. In this position the larger part of the cocoa butter present in the cocoa mass has been pressed through filters 10, 10'. Plunger 5 can be moved to the left again, after which the obtained cocoa cakes can be removed from cavities 9.

As already mentioned before, in many cases the cocoa industry requires that the obtained cakes contain less than 10% cocoa butter. In order to accomplish this, a spacing of more than 92 mm between the two filters in the filling position is selected in the hydraulic presses according to the prior art. Typical pressure cycles last 20 to 25 minutes (min.) and require a pressure of 550 bar. For a prior art press comprising fourteen pots this means that 200 - 250 kg (220 kg, for example) cocoa mass is processed per cycle.

Surprisingly it has become apparent that the duration of the pressure cycle can be reduced by 5 to 10 minutes with the press according to the invention as described above, whilst the required pressure can be reduced by about 10%. A press according to the invention which comprises sixteen pots is capable of processing as much cocoa mass per pressure cycle as a prior art press of the same length which comprises fourteen pots. Because of the reduced length of the cycle, however, the production capacity of the press according to the invention is about 25 - 50% higher.

In addition it has become apparent that the composition of the obtained cakes is more homogeneous; the content of cocoa butter in the cake ranges from 9.5 - 10.5% versus 9 - 13% in the cakes obtained with a prior art press. As a result, the former cakes belong to a higher quality class and their economic value is higher.

A significant advantage from a viewpoint of process technique is furthermore the fact that the risk of so-called "opening" of the press is smaller. In some cases, some pressure elements remain stationary during the pressing operation, whilst others on the other hand are forced aside, as a result of which one or more pots can open and considerable damage to the press may result. This phenomenon is less likely to occur in the press according to the invention, which may be connected with the enhanced homogeneity of the cakes.

Stresses in the frame will be lower due to the lower pressure in the pressure cylinder, as a result of which a more inexpensive material, in particular steel, can be used and no refining methods, or less special ones, for the material are required. This makes it possible to use a cheaper frame construction.

From the foregoing it will be apparent that the invention offers significant advantages over prior art presses whilst the measures to be taken are relatively simple. The invention may be used on existing presses either by adapting the control or operation of the press, in particular by opening the cavities in the pressure elements less far during filling, or by modifying the press and providing it with (more) narrower pressure elements, in particular pots and squeezers.

The invention is not limited to the embodiment as described above, which can be varied in several ways without departing from the scope of the claims, of course. Thus the press can also be used for products whose pressing and filtration behaviour is comparable to that of cocoa mass.

## Claims

1. A press (1) for separating cocoa mass into cocoa cake and cocoa butter, comprising a frame, in which a plurality of pressure elements (6) are disposed, and means (4,5) for compressing the pressure elements (6), wherein the pressure elements (6) each comprise a cavity (9) for receiving cocoa mass to be pressed, in which cavity (9) at least one squeezer (11) is present, and wherein a filter (10, 10') is disposed in front of the squeezer (11) and on the side of the cavity (9) opposite said squeezer (11), **characterised in that**, in the filling position of the squeezer (11), the spacing between the said filters (10, 10') is in a range from 60 to 90 mm.

2. A press (1) according to claim 1, wherein said spacing is in a range from 60 to 76 mm.

3. A press (1) according to claim 1 or 2, wherein said cavity (9) is cylindrical and said filters (10, 10') are flat or substantially flat.

4. A press (1) according to claim 3, wherein the side of the cavity (9) opposite said squeezer (11) is formed by the back of an adjoining squeezer (11).

5. A method for operating a press (1) in accordance with the preamble of claim 1, **characterised in that,** during the step of filling the cavity (9) with cocoa mass, the spacing between the said filters (10, 10') is in a range from 60 to 90 mm.

6. A method for modifying a press (1) in accordance with the preamble of claim 1, **characterised in that**, in the filling position of the squeezer (11), the spacing between the said filters (10, 10') is in a range from 60 to 90 mm.

7. A method according to claim 6, wherein in addition the number of pressure elements (6) is increased.

8. A method according to any one of the claims 5 - 7, wherein said spacing is in a range from 60 to 76 mm.

## Patentansprüche

1. Presse (1) zum Trennen von Kakaomasse in Kakaokuchen und Kakaobutter, die einen Rahmen, in welchem eine Vielzahl an Druckelementen (6) angeordnet ist, und eine Einrichtung (4, 5) zum Zusammendrücken der Druckelemente (6) aufweist, worin die Druckelemente jeweils einen Hohlraum (9) zum Aufnehmen von zu drückender Kakaomasse aufweisen, in welchem Hohlraum (9) mindestens ein Kompressor (11) vorhanden ist, und worin ein Filter (10, 10') vor dem Kompressor (11) und auf der Seite des Hohlraumes (9) gegenüber dem Kompressor (11) angeordnet ist, **dadurch gekennzeichnet, dass** der Abstand zwischen den Filtern (10, 10') in der Füllposition des Kompressors (11) in einem Bereich von 60 bis 90 mm liegt.

2. Presse (1) nach Anspruch 1, worin der Abstand in einem Bereich von 60 bis 76 mm liegt.

3. Presse (1) nach Anspruch 1 oder 2, worin der Hohlraum (9) zylindrisch ist und die Filter (10, 10') eben oder im wesentlichen eben sind.

4. Presse (1) nach Anspruch 3, worin die Seite des Hohlraums (9) gegenüber dem Kompressor (11) durch die Rückseite eines benachbarten Kompressors (11) gebildet ist.

5. Verfahren zum Betreiben einer Presse (1) gemäß dem Oberbegriff von Anspruch 1, **dadurch gekennzeichnet, dass** während des Schritts des Füllens des Hohlraums (9) mit Kakaomasse der Abstand zwischen den Filtern (10, 10') in einem Bereich von 60 bis 90 mm liegt.

6. Verfahren zum Modifizieren einer Presse (1) gemäß dem Oberbegriff von Anspruch 1, **dadurch gekennzeichnet, dass** der Abstand zwischen den Filtern (10, 10') in der Füllposition des Kompressors (11) in einem Bereich von 60 bis 90 mm liegt.

7. Verfahren nach Anspruch 6, worin zusätzlich die Anzahl der Druckelemente (6) erhöht ist.

8. Verfahren nach einem der Ansprüche 5 bis 7, worin der Abstand in einem Bereich von 60 bis 76 mm liegt.

## Revendications

1. Presse (1) pour séparer une masse de cacao en gâteau de cacao et en beurre de cacao, comprenant un châssis dans lequel une pluralité d'éléments de pression (6) sont disposés, et des moyens (4, 5) pour comprimer les éléments de pression (6), dans laquelle les éléments de pression (6) comprennent chacun une cavité (9) pour recevoir la masse de cacao devant être pressée, dans laquelle cavité (9) est présent au moins un dispositif à écraser (11), et dans laquelle un filtre (10, 10') est disposé devant le dispositif à écraser (11) et sur le côté de la cavité (9) qui est opposé au dit dispositif à écraser (11), **caractérisée en ce que,** dans la position de remplissage du dispositif à écraser (11), l'écartement entre les dits filtres (10, 10') est compris entre 60 et 90 mm.

2. Presse (1) selon la revendication 1, dans laquelle le dit écartement est compris entre 60 et 76 mm.

3. Presse (1) selon la revendication 1 ou 2, dans laquelle la dite cavité (9) est cylindrique et les dits filtres (10, 10') sont plats ou sensiblement plats.

4. Presse (1) selon la revendication 3, dans laquelle le côté de la cavité (9) qui est opposé au dit dispositif à écraser (11) est formé par la partie arrière d'un dispositif à écraser contigu (11).

5. Procédé pour exploiter une presse (1) conformément au préambule de la revendication 1, **caractérisé en ce que,** au cours de l'étape de remplissage de la cavité (9) avec une masse de cacao, l'écartement entre les dits filtres (10, 10') est compris entre 60 et 90 mm.

6. Procédé pour modifier une presse (1) conformément au préambule de la revendication 1, **caractérisé en ce que,** dans la position de remplissage du dispositif à écraser (11), l'écartement entre les dits filtres (10, 10') est compris entre 60 et 90 mm.

7. Procédé selon la revendication 6, dans lequel le nombre d'éléments de pression (6) est, de plus, accru.

8. Procédé selon l'une quelconque des revendications 5 à 7, dans lequel le dit écartement est compris entre 60 et 76 mm.
